Europäisches Patentamt

European Patent Office

Office européen des brevets

(19)

(11) **EP 1 387 162 A1**

(12) **EUROPÄISCHE PATENTANMELDUNG**

(43) Veröffentlichungstag:
**04.02.2004 Patentblatt 2004/06**

(51) Int Cl.⁷: **G01N 21/64**, G01N 21/25,
G02B 26/02, G02B 27/14

(21) Anmeldenummer: **03016383.6**

(22) Anmeldetag: **19.07.2003**

(84) Benannte Vertragsstaaten:
**AT BE BG CH CY CZ DE DK EE ES FI FR GB GR
HU IE IT LI LU MC NL PT RO SE SI SK TR**
Benannte Erstreckungsstaaten:
**AL LT LV MK**

(30) Priorität: **31.07.2002 CH 13392002**

(71) Anmelder: **Tecan Trading AG
8708 Männedorf (CH)**

(72) Erfinder:
• **Döring, Klaus, Dr.
5020 Salzburg (AT)**
• **Popp, Dieter, Dr.
83395 Freilassing (DE)**
• **Aistleitner, Herwig
5020 Salzburg (AT)**

(74) Vertreter: **OK pat AG
Chamerstrasse 50
6300 Zug (CH)**

(54) **Vorrichtung und Verfahren zum Messen der Lebensdauer der Fluoreszenz von Fluorophoren in Proben**

(57)     Betrifft eine Vorrichtung (1) bzw. ein Verfahren zum Messen der Lebensdauer der Fluoreszenz von Fluorophoren in Proben, wobei die verwendete Vorrichtung (1) zumindest eine Lichtquelle (2) zum Anregen der Fluoreszenz der Fluorophoren, eine Einstrahloptik (3) zum Lenken des Anregungslichts (4) auf diese Proben, einen Probentisch (5) zum Platzieren einer Proben enthaltenden Mikroplatte (6) bei der Einstrahloptik (3), eine Emissionsoptik (7) zum Lenken des Fluoreszenzlichtes (8) von den Proben auf einen Detektor (9) und zumindest einen Detektor (9) mit Auswertungselektronik umfasst. Die erfindungsgemässe Vorrichtung bzw. entsprechende Verfahren sind dadurch gekennzeichnet,

dass die Einstrahloptik (3) der Vorrichtung (1) einen Strahlteiler (10) mit mehreren Spiegeln (11) umfasst, welche einen Teil des Lichts (4) aus der zumindest einen Lichtquelle (2), das immer mit gleicher Leistung und gleicher Pulsform entlang einer ersten optischen Achse (12) in diesen Strahlteiler (10) eintritt, in Richtung einer Probe ablenken und einen Teil dieses Lichts auf den jeweils dahinter liegenden Spiegel (11) passieren lassen. Zudem sind eine vorteilhafte Faseroptik und ein Computerprogrammprodukt zur Verwendung in der erfindungsgemässen Vorrichtung bzw. zur Durchführung des erfindungsgemässen Verfahrens offenbart und beansprucht.

Fig. 1B

EP 1 387 162 A1

**Beschreibung**

Die Erfindung betrifft die Charakterisierung von Proben an Hand der Lebensdauer der durch diese Proben emittierten Lumineszenz.

Ein wesentlicher Schritt hin zur Entwicklung eines pharmazeutisch aktiven Wirkstoffes betrifft das Massen-Screening von natürlichen und synthetischen Verbindungen, welches bevorzugt mit hohem Probendurchsatz ausgeführt wird. Dazu verwendete chemische Bibliotheken umfassen Hunderttausende von unterschiedlichen Verbindungen, deren Anzahl und Komplexität immer grösser werden. In einem Massen-Screen werden bevorzugt jene Verbindungen ausgewählt, die über eine hohe Affinität zu spezifischen Rezeptoren verfügen und die deshalb als vielversprechende Ausgangsstoffe für ein Medikament gelten. Diese Vorgehensweise erfordert Lösungen, mit welchen die potentielle Kandidaten ("Hits") mit grosser Effizienz herausgepickt werden können. Dabei sollen jedoch falsche Treffer, die z.B. durch eine hohe Eigenfluoreszenz der Verbindungen verursacht werden, vermieden werden.

Die Verwendung der Eigenschaften von Licht zum Anzeigen eines Testergebnisses zur Bestimmung der Aktivität einer Verbindung in Bezug auf ein Zielmolekül oder "Target" ist im Bereich des Massen-Screenings ("High Throughput Screening" = HTS) aber auch in der Assay-Entwicklung ("Assay Development") überaus bekannt. Das Bestimmen der Lumineszenzintensität oder der Polarisation der Lumineszenz ist im Stand der Technik, insbesondere für Mikroplattensysteme, ausführlich beschrieben (vgl. z.B. US 6,187,267, WO 99/23466). Diese Systeme können auf einfache Weise in automatisierte Anlagen integriert werden, um Millionen von Verbindungen innerhalb kurzer Zeit auszutesten. Viele der Versuchsreihen basieren auf dem Bestimmen der Lumineszenzintensität, entweder auf Grund von spontaner Emission ("Fluorescence Intensity" = FI), oder auf Grund von zeitverzögerter Emission, die manchmal als "TRF" (= Time Resolved Fluorescence) bezeichnet wird.

Wenn natürliche oder synthetische Verbindungen getestet werden, dann stellt deren Eigenfluoreszenz eine Störquelle dar, deren Signal sich dem eigentlichen, von den Fluorophoren stammenden Fluoreszenzsignal überlagert. Bei hohen Störsignalen kann dies zu gravierenden Fehlinterpretationen führen.

Die Verwendung von Metall-Chelatkomplexen seltener Erden (US 6,242,268) als Marker ermöglicht das Durchführen von Messungen mit zeitverzögerter Emission. Solche Komplexe weisen typischerweise eine Lebenszeit von etwa 0.01 bis 50 ms auf, was wesentlich länger ist als die Lebenszeit der Fluoreszenz natürlicher Substanzen. In solchen Messungen mit zeitverzögerter Emission wird darum das Fluoreszenzintensitäts-Signal der Metall-Chelatkomplexe seltener Erden bestimmt, nachdem die störende Fluoreszenz der Verbindungen bereits abgeklungen ist. Es soll hervorgehoben werden, dass TRF immer eine Messung der Intensität - wenn auch zeitverzögert - bedeutet.

Bei FI- und TRF-Messungen wird das Intensitäts-Signal durch viele Faktoren beeinflusst. Zu nennen sind dabei der "Inner Filter Effect", die Streuung auf Grund der Trübung der Proben, das Ausbleichen des Farbstoffes und zusätzliche Volumen- und Meniskus-Effekte. All diese Effekte überlagern sich dem eigentlichen, von den Fluorophoren stammendem Signal und können zu Fehlinterpretationen der anfallenden Messdaten führen. Zudem wird die FI durch die Eigenfluoreszenz der zu untersuchenden Verbindungen nachteilig beeinflusst.

"FP" (= Fluorescence Polarisation) und "TRET" (= Time Resolved Energy Transfer) sind ebenfalls bekannt bei Mikroplattenmess-Systemen (vgl. z.B. US 6,187,267, WO 99/23466). Beide Methoden haben sich als robuster herausgestellt als FI und TRF. Im Gegensatz zu FI und TRF beruhen FP und HTRF auf zwei Messungen, die über eine Verhältnisbildung verrechnet werden. Bei diesen sog. ratiometrischen Methoden können einzelne Artefakte vermieden werden. FP und TRET haben aber auch ihre Grenzen: Falls die überall erhältlichen, konventionellen biochemischen Fluorophore, die eine Lebensdauer im Bereich von Nanosekunden aufweisen, verwendet werden, so ist bekannt, dass FP ausschliesslich zur Beurteilung biochemischer Assaysysteme verwendet werden kann, in welchen kleine Liganden an grosse Rezeptoren gebunden werden. FP ist auch stark eingeschränkt, wenn hochfluoreszente Verbindungen getestet werden müssen. TRET verwendet immer 2 Labels (vgl. EP 0 929 810). Die Auswahl der Labels oder Fluorophore ist dadurch begrenzt, dass jeweils ein Donor-Label und ein entsprechender Akzeptor-Label mit zu einander passendem Spektrum gesucht werden müssen. Das Emissionsspektrum des Donors (bei TRET Europium) muss sich mit dem Anregungsspektrum des Akzeptors überlappen. Befinden sich Donor und Akzeptor in unmittelbarer Nähe (typischerweise 5 nm) - z.B. durch die Bindung eines mit dem Akzeptor gelabelten Moleküls an ein mit dem Donor gelabelten Moleküls - so findet ein strahlungsloser Energieübertrag vom Donor auf den Akzeptor statt, wenn die Dipolmomente beider ausserdem optimal zueinander ausgerichtet sind. Der strahlungslose Energietransfer bewirkt, dass der Akzeptor emittiert. Wenn aber Donor und Akzeptor nicht nahe beieinander sind, d.h. wenn keine Bindung stattgefunden hat, so emittiert nur der Donor. Die Verwendung von Europium erlaubt eine zeitverzögerte Messung der Emission. Bei TRET muss jedoch die Donor- und Akzeptor-Emission bestimmt werden. Probleme ergeben sich, wenn die Probe die Donor- und Akzeptor-Fluoreszenz unterschiedlich absorbiert.

Lumineszenzspektrometer für Proben in Küvetten, wie das FL/FS 900 (Edinburgh Instruments Ltd., Riccarton, Currie, Edinburgh, Schottland) erlauben die Charakterisierung der Lumineszenzeigenschaften einer Probe, wie z.B. die Anregungsund Emissionswellenlänge, die Emissionsintensität, die Polarisation und die Lebensdauer der Fluoreszenz. Allerdings erfüllen diese Geräte die Grundvoraussetzungen eines routinemässigen Massen-Screenings nicht.

Insbesondere sind die kurze Bearbeitungszeiten und die Robotertauglichkeit, nur in ungenügendem Masse gegeben.

Anwendungen der Phasenmodulationstechnologie zur Bestimmung der Fluoreszenzlebensdauer von Proben werden im Patent US 6,317,207 beschrieben. Die Frequenzantwort ist aber nur für den monoexponentiellen Abfall der Fluoreszenz einfach zu interpretieren, wogegen Proben mit mehr als einer Fluoreszenzlebensdauer einen Frequenzscan notwendig machen. Falls die Probe weit auseinander liegende Lebenszeiten umfasst, so muss der Frequenzscan einen weiten Bereich abdecken: Typischerweise 5 MHz bis zu 5 GHz für Lebenszeiten von 200 ps bzw. 2 ns, welche in der gleichen Probe vorkommen. Die Modulation mit Frequenzen im Gigahertzbereich wird durch "cavity-dumped" Picosenkundenfarbstofflaser, die durch modengekoppelte Argonionen-Laser gepumpt werden, erzeugt. Dieser Ansatz ist aber für das automatische Testen mit hohem Probendurchsatz (HTS) wegen der Grösse und Kosten der Lichtquelle nicht anwendbar.

Aufgabe der vorliegenden Erfindung ist es deshalb, eine Vorrichtung bzw. ein Verfahren vorzuschlagen, mit der bzw. dem die Fluoreszenz von Proben mit einfachen Mitteln und hohem Durchsatz untersucht werden kann und die weniger anfällig gegen die von den zu untersuchenden Verbindungen hervorgerufenen Störeinflüsse sind als die aus dem Stand der Technik bekannten Vorrichtungen und Verfahren.

Diese Aufgabe wird mit der Merkmalskombination des unabhängigen Anspruchs 1 bzw. des unabhängigen Anspruchs 10 gelöst.

Dabei definieren die erfindungsgemässe Vorrichtung bzw. das erfindungsgemässe Verfahren zum Messen der Lebensdauer der Fluoreszenz von Fluorophoren in Proben in einer Vorrichtung, die zumindest eine Lichtquelle zum Anregen der Fluoreszenz der Fluorophoren, eine Einstrahloptik zum Lenken des Anregungslichts auf diese Proben, einen Probentisch zum Platzieren einer Proben enthaltenden Mikroplatte bei der Einstrahloptik, eine Emissionsoptik zum Lenken des Fluoreszenzlichtes von den Proben auf einen Detektor und zumindest einen Detektor mit Auswertungselektronik umfasst. Die erfindungsgemässe Vorrichtung bzw. das erfindungsgemässe Verfahren ist dadurch gekennzeichnet, dass die Einstrahloptik der Vorrichtung einen Strahlteiler mit mehreren Spiegeln umfasst, welche einen Teil des Lichts aus der zumindest einen Lichtquelle, das immer mit gleicher Leistung und gleicher Pulsform entlang einer ersten optischen Achse in diesen Strahlteiler eintritt, in Richtung einer Probe ablenken und einen Teil dieses Lichts auf den jeweils dahinter liegenden Spiegel passieren lassen.

Vorteilhafte Weiterbildungen und zusätzliche Merkmale der Erfindung ergeben sich aus den abhängigen Ansprüchen.

Vorteile der Erfindung umfassen:

- das Floureszenz-Lebensdauersignal der Probe im Nanosekundenbereich ermöglicht - ausgehend von einer Vielzahl von Molekülen - die Anordnung und Auswertung von biochemischen Testreihen in Mikroplatten;
- das Fluoreszenzlebensdauer-Signal aus einer Zeitabschnittsmessung kann zum Unterscheiden des wirklichen Label Signals von der Eigenfluoreszenz der zu untersuchenden Verbindungen verwendet werden;
- sogar bei Anwesenheit von stark fluoreszierenden Verbindungen kann die Label-Fluoreszenz auf einfache Art von der Verbindungsfluoreszenz unterschieden werden;
- weil das Fluoreszenzlebensdauer-Signal ausschliesslich von einer Veränderung der physiko-chemischen Mikroumgebung der Probe abhängt, beeinflussen Artefakte, wie Streuung, der "Inner Filter Effekt", Unterschiede in Volumen und Meniskus, das Messsignal nicht.

Die Erfindung soll nun an Hand von schematischen und beispielhaften Zeichnungen, welche den Umfang der Erfindung nicht beschränken sollen, näher erläutert werden. Dabei zeigt:

Fig. 1A    den Grundriss einer Vorrichtung zum Messen der Lebensdauer der Fluoreszenz von Fluorophoren in Proben, gemäss einer ersten Ausführungsform;

Fig. 1B    die Frontansicht der Vorrichtung von Fig. 1A;

Fig. 2A    eine dreidimensionale Darstellung eines erfindungsgemässen Spiegelschiebers, gemäss einer ersten Ausführungsform;

Fig. 2B    eine weitere, dreidimensionale Darstellung des Spiegelschiebers von Fig. 2A;

Fig. 3A    den Grundriss einer ersten erfindungsgemässen Anordnung einer Faseroptik zum Ankoppeln von zwei Lasern an einer Anschlussstelle vor einer Sammellinse;

Fig. 3B    die Frontansicht der Anordnung von Fig. 3A, von der Sammellinse aus betrachtet;

Fig. 4     einen typischen zeitlichen Verlauf der Fluoreszenzintensität gemessen an einem Ensemble von Fluorophoren.

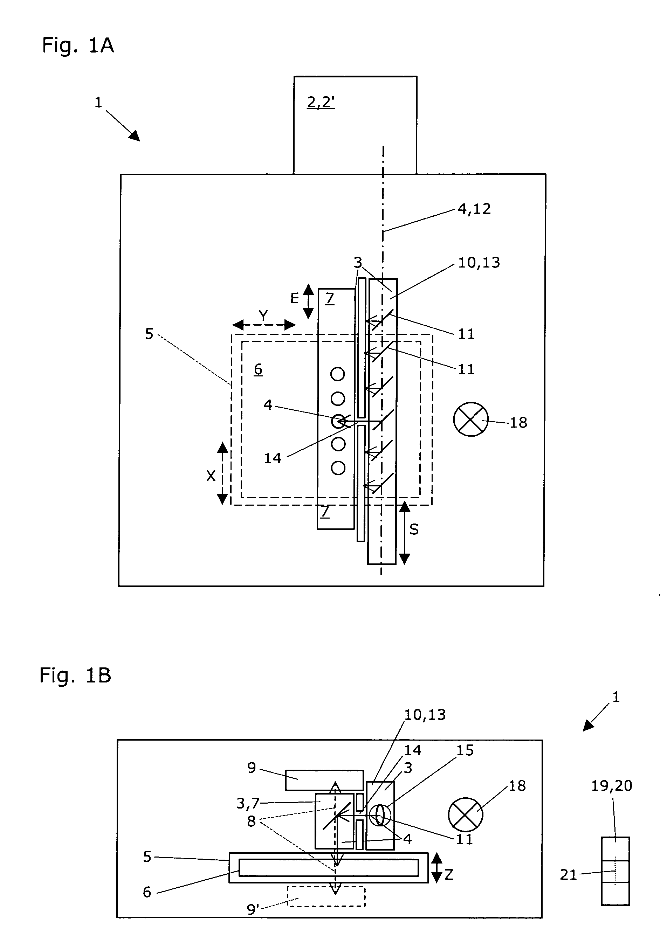

Figur 1A zeigt den stark schematisierten Grundriss und Figur 1B die entsprechende Frontansicht einer Vorrichtung zum Messen der Lebensdauer der Fluoreszenz von Fluorophoren in Proben, gemäss einer ersten Ausführungsform. Die Vorrichtung 1 umfasst zumindest eine Lichtquelle 2 zum Anregen der Fluoreszenz der Fluorophore in den Proben, eine Einstrahloptik 3 zum Lenken des Anregungslichts 4 auf diese Proben, einen Probentisch 5 zum Platzieren einer Proben enthaltenden Mikroplatte 6 bei der Einstrahloptik 3, eine Emissionsoptik 7 zum Lenken des Fluoreszenzlichtes 8 von den Proben auf einen Detektor 9 und zumindest einen Detektor 9 mit Auswertungselektronik (nicht gezeigt). Die Einstrahloptik 3 der Vorrichtung 1 umfasst einen Strahlteiler 10 mit mehreren Spiegeln 11, welche einen Teil des Lichts 4 aus der zumindest einen Lichtquelle 2, das immer mit gleicher Leistung und gleicher Pulsform entlang einer ersten optischen Achse 12 in diesen Strahlteiler 10 eintritt, in Richtung einer Probe ablenken und einen Teil dieses Lichts 4 auf den jeweils dahinter liegenden Spiegel 11 passieren lassen.
Das Abrastern oder "Scannen" aller Wells einer Mikroplatte 6 wird durch die beiden Doppelpfeile X und Y symbolisiert. Dieses Bewegen des eine Mikroplatte 6 tragenden Probentisches 5 erfolgt bevorzugt über eine computergesteuerte Automatik. Vorzugsweise ist auch der Arbeitsabstand zwischen Einstrahl- bzw. Emissionsoptik 3,7 und Mikroplatte 6 automatisch einstellbar. Im hier gezeigten Ausführungsbeispiel wird dieser Arbeitsabstand durch Verändern der Z-Position des Probentisches 5 eingestellt (siehe Doppelpfeil Z in Fig. 1B).

Weil erwartet werden muss, dass die Proben in einer Mikroplatte 6, die z.B. 96, 384 oder auch 1536 Wells umfassen kann, bei unterschiedlichen Bedingungen fluoreszieren können, soll die Intensität des Anregungslichts 4 variiert werden können. Hierbei darf sich der zeitliche Verlauf -des Lichtimpulses nicht verändern. Diese Aufgabe wird dadurch erfüllt, dass ein Spiegelschieber bzw. ein Spiegelschlitten 13, gemäss einer ersten Ausführungsform, gebaut wird, der eine Serie von sechs Spiegeln 11 aufweist. Alle Spiegel 11 sind unter einem Winkel von 45° gegenüber einer ersten optischen Achse 12, entlang der das Anregungslicht 4 aus der Lichtquelle 2 kommt, montiert. Alle Spiegel 11 reflektieren 75% der ankommenden Lichtintensität um 90° in Richtung einer Probe. Der grösste Teil der verbleibenden 25% der Lichtintensität durchdringt jeweils diese Spiegel 11 und trifft auf die Oberfläche des jeweils nächsten, dahinterliegenden Spiegels 11, der wiederum 75% reflektiert. Die Verwendung von sechs Spiegeln 11 erlaubt die Anwendung von sechs unterschiedlichen Lichtintensitäten mit dem Betrieb von nur einem Laser, der das Anregungslicht 4 immer mit gleicher Leistung und gleicher Pulsform aussendet. Durch die Verschiebung des Spiegelschiebers oder Spiegelschlittens 13 (siehe Doppelpfeil S) bzw. dessen Spiegelpositionen, so dass diese gerade gegenüber einer zu der Probe führenden, bevorzugt fixen und unbeweglichen Apertur 14 zu liegen kommen, ermöglicht die Auswahl von sechs bestimmten Intensitäten für das Anregen der Fluorophoren einer Probe, ohne dass die Parameter des Lasers 2 verändert werden müssten.

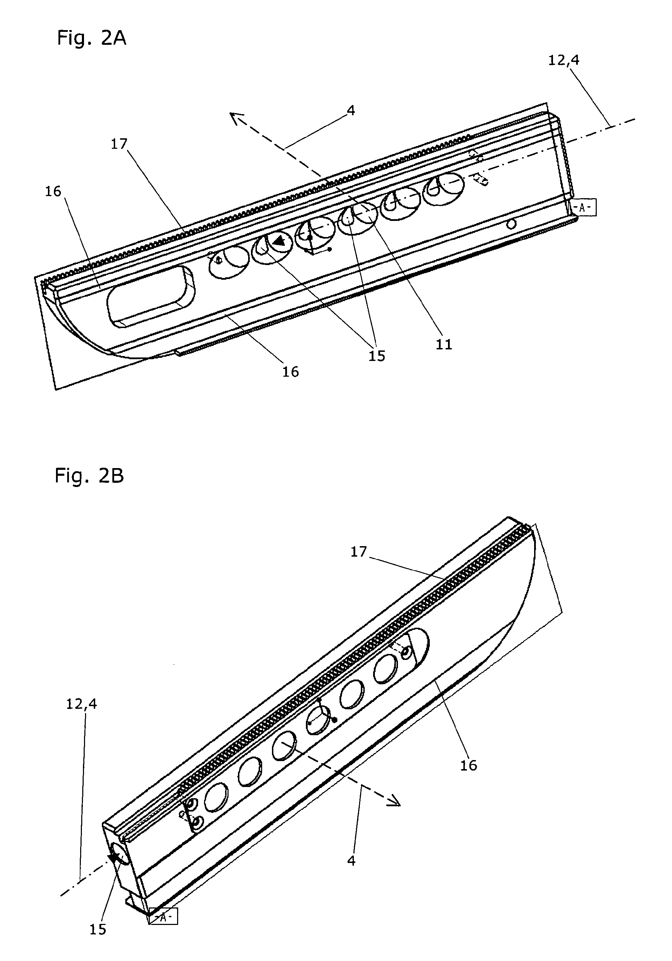

Die Figuren 2A und 2B zeigen je eine dreidimensionale Darstellung eines erfindungsgemässen Spiegelschiebers oder Spiegelschlittens 13, gemäss einer ersten Ausführungsform. Dieser Spiegelschlitten 13 umfasst eine Bohrung 15 zum Einstrahlen des Laserlichts 4 auf die Spiegel 11 entlang der ersten optischen Achse 12. Mittels erhabener Führungen 16 und einer eingelegten Zahnstange 17, in welche ein Zahnrad eines Antriebes (nicht gezeigt) eingreift, um das Längsverschieben des Spiegelschlittens 13 entlang der ersten optischen Achse 12 zu bewerkstelligen.

Eine weitere Lichtquelle 18 in Form einer Blitzlampe, einer LED bzw. eines Lasers oder in Form eines ausschliesslich kontinuierlich zu verwendenden Lichtstrahlers, wie einer Xenon-Bogenlampe, kann zusätzlich verwendet werden, um die Proben zum Fluoreszieren anzuregen. Der Strahlteiler 10 ist deshalb aus der Vorrichtung 1 herausnehmbar ausgebildet und durch ein Filterelement 19 ersetzbar. Das Filterelement 19 umfasst zumindest einen Filter 21, welcher einen Teil des Lichts der weiteren Lichtquelle 18 in Richtung der Probe passieren lässt. Werden mehrere Filter 21 eingebaut, so kann der Bandpass dieser Filter 21 gleich oder unterschiedlich sein. Vorzugsweise ist das Filterelement 19 als entlang der ersten optischen Achse 12 verschiebbarer Filterschlitten 20 ausgebildet und wird ausserhalb der Vorrichtung aufbewahrt (vgl. Fig. 1B). Ein solcher Filterschlitten 20 entspricht in seiner Ausführung, Positionierung und Beweglichkeit vorzugsweise weitgehend einem Spiegelschlitten 13, wie er in den Figuren 1 und 2 dargestellt ist. Somit ist sowohl der Spiegelschlitten 13 als auch der Filterschlitten 20 bevorzugt mit einem - Zahnstange 17 und Zahnrad (nicht gezeigt) umfassenden - Antrieb automatisch in die für eine bestimmte Probe richtige Position verfahrbar ausgebildet.

Um das Anregungslicht von mehreren Lichtquellen 2 (z.B. von zwei Lasern) unterschiedlicher Wellenlänge zum Untersuchen eine Probe kombinieren zu können, müssen diese auf eine Probe geführt werden. Bekanntlich beträgt der Durchmesser eines Wells einer 1536-Well Mikroplatte 1.25 mm. Deshalb sollen die maximalen Distanzen zwischen den einzelnen, durch die unterschiedlichen Lichtquellen erzeugten "Spots" nicht grösser als 1 mm sein und vorzugsweise sogar weniger als 0.5 mm betragen, damit die Spots mit genügendem Abstand zu den Wänden eines Wells in eine Probe treffen.

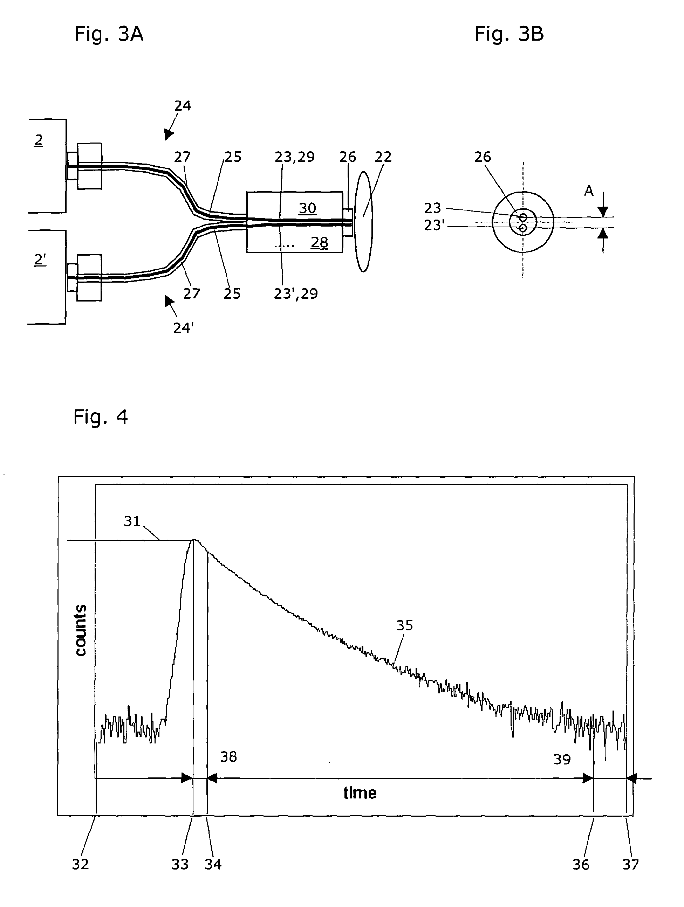

Diese Aufgabe wurde dadurch gelöst (vgl. Fig. 3A), dass der Lichtstrahl von (in dieser Ausführungsform) zwei Lasern 2,2' über Spiegel und Linsen von einem als Anschlussstelle 22 bezeichneten Objektiv auf die Probe geleitet wird. Damit werden zwei zueinander parallele, sich überlagernde optische Wege 23,23' für die zwei Farben des Anregungslichts erzeugt. Die beiden Laser 2,2' speisen ihr Licht in je eine optische Faser 24,24' mit 50 μm Durchmesser ein. Die beiden lichtleitenden Kerne 25,25' der beiden optischen Fasern 24,24' müssen nun in eine gemeinsame Kupplung bzw. einen gemeinsamen Stecker 26 geführt werden.

Eine aus dem Stand der Technik (Telekommunikation) bekannte Lösung, bei der eine Faser etwas kürzer ist und gegen den Kern der anderen Faser geschweisst wird, wird deshalb nicht bevorzugt, weil mit einem Verlust von ca. 50% in der kürzeren Faser gerechnet werden müsste.

Zwei unterschiedliche Ausführungsformen werden hier vorgeschlagen:

1) Zwei Fasern 24,24' werden in einen gemeinsamen Stecker 26 geleitet, welcher seinerseits auf dem als Ausgangskoppler verwendeten Objektiv sitzt. Dies hat den Vorteil, dass die einzelnen Fasern 24,24' physisch nicht verändert werden müssen. Als nachteilig kann angesehen werden, dass die beiden Faserkerne 25,25' nicht beide in das Zentrum des Linsensystems zu liegen kommen. Deshalb können die beiden Lichtstrahlen nicht absolut parallel und überlappend sein. Wenn aber die Abweichungen klein genug sind, so stellt diese Lösung einen günstigen und praktikablen Kompromiss dar. Allerdings sind die Standardstecker 26 so konstruiert, dass sie gerade eine einzelne Faser halten können, deren Mantel eine Zugentlastung zum Schutz der Faser darstellt. Weil hier zwei dünnere Mäntel 27,27' verwendet werden müssen, ist die Stabilität dieser Fasern 24,24' etwas reduziert.

2) Diese Lösung entspricht weitgehend der Lösung 1, jedoch mit dem Unterschied, dass die Zugentlastung ausserhalb des Steckers 26 in einem separaten Gehäuse 28 ausgeführt wird. Beide Fasern werden dahin geführt, ihres Mantels entledigt und in einem gemeinsamen Mantel wiedervereinigt.

In beiden Fällen ist es vorteilhaft, die Fasern 24,24' so kurz wie möglich zu halten, damit eine Eigenfluoreszenz des Fasermaterials bzw. eine Autofluoreszenz vermieden werden kann. Die beiden vorgeschlagenen Lösungen haben den Vorteil, dass sie wesentlich kostengünstiger sind als die aus dem Stand der Technik bestbekannte Verwendung eines dichroitischen Strahlteilerspiegels. Damit kann auch auf die dort notwendige Verwendung von drei Linsensystemen - zur Produktion des parallelen Lichtes im Bereich des Spiegels und zum anschliessenden Refokussieren des Strahls in die Probe - verzichtet werden. Bei der Verwendung eines dichroitischen Strahlteilerspiegels müssten zudem alle drei Linsen perfekt gegen einander ausgerichtet sein, damit ein paralleler, überlappender Lichtstrahl produziert werden kann.

Tatsächlich ist es insbesondere mit der zweiten Ausführungsform der Faservereinigung (vgl. Fig. 3) möglich, an der Anschlussstelle (22) im Bereich des Endes 29 des ersten und zweiten Lichtleiters 24,24' die Ummantelung 27,27' dieser Lichtleiter entfernt und durch eine gemeinsame Ummantelung 30 ersetzt ist, so dass die optischen Achsen 23,23' der beiden Lichtleiter 25,25' in einem minimalen Abstand zueinander liegen; bevorzugt beträgt dieser Abstand A (vgl. Fig. 3B) 125 μm.

Die Vorrichtung enthält bevorzugt einen Detektor 9 für die Fluoreszenztechniken, einen Detektor 9' unterhalb der Mikroplatte für die Absorption sowie einen weiteren Detektor 9" für die Lumineszenz. Dieser (in Fig. 1 nicht abgebildete) Detektor 9" wird bevorzugt oberhalb der Mikroplatte und in einer Distanz zum Detektor 9 angeordnet, so dass dieser Chemilumineszenzdetektor 9" durch gezielte Bewegung der Mikroplatte 6 mit dem Probentisch 5 mit jedem gewünschten Well der Mikroplatte angefahren werden kann. Eine Vorrichtung 1 umfasst vorzugsweise einen Prozessor zur Steuerung der Vorrichtung und zur automatischen Auswertung der Messdaten der Detektoren 9,9',9" sowie einen Antrieb des Probentisches 5 zur automatischen Positionierung der Wells einer Mikroplatte 6 bei Einstrahloptik 3 und Emissionsoptik 7 bzw. bei einem der Detektoren 9,9',9". Die automatische Positionierung umfasst zumindest das Anordnen der Mikroplatte in einer Position, die durch einen X- und einen Y-Wert eines horizontalen, rechtwinkligen Koordinatensystems definiert ist.

Die automatische Abarbeitung, d.h. Bestrahlung, Detektion und Auswertung in Bezug auf alle möglichen solchen Positionen einer Mikroplatte wird als ein "Scan" bezeichnet. Vorzugsweise ist zudem eine automatische Positionierung der Mikroplatte in der Z-Richtung (senkrecht zu der durch die X- und Y-Achse definierten Horizontale) über entsprechende motorische Antriebe ermöglicht, so dass der Arbeitsabstand zwischen der Einstrahl- bzw. der Emissionsoptik 3,7 oder zwischen dem Detektor 9" und der Mikroplatte 6 automatisch optimiert werden kann.

Zudem wird ein Computerprogrammprodukt zur Steuerung der Vorrichtung und zur automatischen Auswertung der Messdaten vorgeschlagen. Dieses in einem Computer aktivierbare Computerprogrammprodukt ist dadurch gekennzeichnet, dass es einen Prozessor befähigt, mit der oben beschriebenen Vorrichtung 1 ein beliebiges Well, eine bestimmte Anzahl Wells bzw. alle Wells einer Mikroplatte 6 anzusteuern, die Probe in diesen Wells mit Anregungslicht 4 zu aktivieren, die Lebensdauer der von der Probe ausgesendeten Fluoreszenz zu messen und der Probe eine diese charakterisierende Kennzahl zuzuordnen.

Das automatische FLT-Angleichen umfasst folgende Verfahrensschritte:

1) Durchführen einer Referenzmessung ohne Anwesenheit einer Probe zum Bestimmen der Gerätekonstante.

2) Ermitteln der Randbedingungen für die Angleichungsparameter ausgehend von der Referenzmessung:

a) Bestimmen des Zeitpunktes 33 an dem das Maximum 31 auftritt;

b) Bestimmen des Zeitpunktes 36 an dem die Anpassung endet. Dieser Zeitpunkt entspricht dem Ende des Zeitfensters 36 minus eines konstanten Zeitintervalls 39.

3) Messen der Proben in den Wells einer Mikroplatte und Anpassung der Probendaten:

a) Die Voranpassung erfolgt bi-exponentiell unter Verwendung der Randbedingungen aus 2), das Ergebnis sind zwei Lebensdauern;

b1) Falls die erste Lebenszeit kurz ist und die dazugehörende erste Amplitude einen signifikanten Anteil der Gesamtamplitude darstellt, wird die Anpassung ausgehend vom Zeitpunkt 33 zuzüglich eines kurzen Zeitintervalls 38 gestartet;

b2) Falls die Bedingungen von b1) nicht erfüllt sind, wird die Anpassung ausgehend vom Zeitpunkt 33 zuzüglich eines langen Zeitintervalls (nicht dargestellt in Fig. 4) gestartet;

c1) Falls die zweite Lebenszeit viel länger ist als die erste Lebenszeit, wird eine bi-exponentielle Anpassung ausgeführt, wobei die beiden Lebensdauern ermittelt werden;

c2) Falls die Bedingungen von c1) nicht erfüllt sind, wird eine monoexponentielle Anpassung ausgeführt, wobei die einzelne Lebenszeit resultiert.

Eine Entfaltung ist nicht notwendig, da die Laserimpulse kürzer sind als die zu untersuchenden Vorgänge.

Die Formel zum Anpassen lautet:

$$y = \sum_{i=1}^{n} \alpha_i * e^{\frac{-t}{\tau_i}} + BG$$

wobei gilt:

n = 1(2) für mono(bi) exponentielle Anpassung
t = Zeitabstand vom Nullpunkt
a = Amplitude
$\tau$ = Lebensdauer
BG = Hintergrund
y = errechneter, eine Probe charakterisierender Wert

Figur 4 zeigt einen typischen zeitlichen Verlauf der Fluoreszenzintensität 35 gemessen an einem Ensemble von Fluorophor-Molekülen mit Hilfe der an sich bekannten, zeitkorrelierten Einzelphotonenzählung (TCSPC - Time Correlated Single Photon Counting). Dargestellt ist der für eine automatische Anpassung wichtige höchste Messpunkt 31, der das Maximum der gezählten Einzelphotonen markiert. Zudem sind die charakteristischen Zeitmarken 32 (Begin der gemessenen Zeit), 33 (Zeitpunkt des Messmaximums), 34 (Startpunkt für das Angleichen der Kurve der Fluoreszenzintensität 35), 36 (Endpunkt für das Angleichen der Kurve der Fluoreszenzintensität 35) und 37 (Ende der gemessenen Zeit).

Beliebige Kombinationen der offenbarten Merkmale der Erfindung gehören zu deren Umfang.

Die Bezugszeichen bezeichnen jeweils gleiche Merkmale, auch wenn nicht zu jeder Figur alle Merkmale ausdrücklich benannt werden.

**Patentansprüche**

1. Vorrichtung (1) zum Messen der Lebensdauer der Fluoreszenz von Fluorophoren in Proben, wobei die Vorrichtung zumindest eine Lichtquelle (2) zum Anregen der Fluoreszenz der Fluorophoren, eine Einstrahloptik (3) zum Lenken des Anregungslichts (4) auf diese Proben, einen Probentisch (5) zum Platzieren einer Proben enthaltenden Mikroplatte (6) bei der Einstrahloptik (3), eine Emissionsoptik (7) zum Lenken des Fluoreszenzlichtes (8) von den Proben auf einen Detektor (9) und zumindest einen Detektor (9) mit Auswertungselektronik umfasst, **dadurch gekennzeichnet, dass** die Einstrahloptik (3) der Vorrichtung (1) einen Strahlteiler (10) mit mindestens zwei Spiegeln (11) umfasst, welche einen Teil des Lichts (4) aus der zumindest einen Lichtquelle (2), das immer mit gleicher Leistung und gleicher Pulsform entlang einer ersten optischen Achse (12) in diesen Strahlteiler (10) eintritt, in Richtung einer Probe ablenken und einen Teil dieses Lichts auf den jeweils dahinter liegenden Spiegel (11) passieren lassen.

2. Vorrichtung (1) nach Anspruch 1, **dadurch gekennzeichnet, dass** der Strahlteiler (10) als entlang dieser ersten optischen Achse (12) verschiebbarer Spiegelschlitten (13) ausgebildet ist und das Licht (4) aus der ersten Lichtquelle (2) um 90° in Richtung einer Probe ablenkt.

3. Vorrichtung (1) nach Anspruch 1 oder 2, **dadurch gekennzeichnet, dass** die Spiegel (11) des Strahlteilers (10) jeweils 75% des auftreffenden Lichtes (4) reflektieren und 25% dieses Lichtes auf den jeweils dahinter liegenden Spiegel (11) passieren lassen.

4. Vorrichtung (1) nach einem der vorhergehenden Ansprüche, welche zudem eine weitere Lichtquelle (18) umfasst, **dadurch gekennzeichnet, dass** der Strahlteiler (10) aus der Vorrichtung (1) herausnehmbar ausgebildet und durch ein Filterelement (19) ersetzbar ist, wobei das Filterelement (19) zumindest einen Filter (21) umfasst, welcher einen Teil des Lichts der Lichtquelle (18) in Richtung der Probe passieren lässt.

5. Vorrichtung (1) nach Anspruch 4, **dadurch gekennzeichnet, dass** das Filterelement (19) als entlang dieser ersten optischen Achse (12) verschiebbarer Filterschlitten (20) ausgebildet ist, wobei der Bandpass der Filter (21) gleich oder unterschiedlich ist.

6. Vorrichtung (1) nach zumindest einem der Ansprüche 2 bis 5, **dadurch gekennzeichnet, dass** der Spiegelschlitten (13) oder Filterschlitten (20) mit einem Antrieb automatisch in die für eine bestimmte Probe richtige Position verfahrbar ausgebildet ist.

7. Vorrichtung (1) nach einem oder mehreren der vorhergehenden Ansprüche, wobei die Vorrichtung (1) zwei Lichtquellen (2) in Form von Lasern umfasst, **dadurch gekennzeichnet, dass** die beiden Laser an einen ersten Lichtleiter (25) bzw. zweiten Lichtleiter (25') gekoppelt sind und die beiden Lichtleiter (25,25') das Licht der beiden Laser an einer Anschlussstelle in eine Sammellinse (22) einspeisen, mit welcher die beiden dadurch definierten Fokuspunkte in einem bestimmten Well einer Mikroplatte (6) positionierbar sind.

8. Vorrichtung (1) nach Anspruch 7, **dadurch gekennzeichnet, dass** bei der Anschlussstelle (22) im Bereich des Endes (29) des ersten und zweiten Lichtleiters (25,25') die Ummantelung (27,27') dieser Lichtleiter entfernt und durch eine gemeinsame Ummantelung (30) ersetzt ist, so dass die optischen Achsen (23,23') der beiden Lichtleiter (25,25') in einem minimalen Abstand (A) zueinander liegen.

9. Vorrichtung (1) nach Anspruch 8, **dadurch gekennzeichnet, dass** der minimale Abstand (A) 125 µm beträgt.

10. Vorrichtung nach einem oder mehreren der vorhergehenden Ansprüche, **dadurch gekennzeichnet, dass** die Vorrichtung einen Prozessor zur Steuerung der Vorrichtung (1) und zur automatischen Auswertung der Messdaten der Detektoren (9,9',9'') sowie einen Antrieb des Probentisches (5) zur automatischen Positionierung der Wells einer Mikroplatte (6) bei Einstrahloptik (3) und Emissionsoptik (7) umfasst.

11. Verfahren zum Messen der Lebensdauer der Fluoreszenz von Fluorophoren in Proben in einer Vorrichtung (1), wobei die Vorrichtung zumindest eine Lichtquelle (2) zum Anregen der Fluoreszenz der Fluorophoren, eine Einstrahloptik (3) zum Lenken des Anregungslichts (4) auf diese Proben, einen Probentisch (5) zum Platzieren einer Proben enthaltenden Mikroplatte (6) bei der Einstrahloptik (3), eine Emissionsoptik (7) zum Lenken des Fluoreszenzlichtes von den Proben auf einen Detektor und zumindest einen Detektor mit Auswertungselektronik umfasst, **dadurch gekennzeichnet, dass** das Licht aus der zumindest einen Lichtquelle (2) immer mit gleicher Leistung und gleicher Pulsform entlang einer ersten optischen Achse (12) in einen Strahlteiler (10) eingespeist wird, wobei der Strahlteiler (10) mindestens zwei Spiegel (11) umfasst, mit welchen ein Teil des Lichts (4) aus der zumindest einen Lichtquelle (2), in Richtung einer Probe abgelenkt und ein Teil dieses Lichts (4) auf den jeweils dahinter liegenden Spiegel (11) durchgelassen wird.

**12.** Verfahren nach Anspruch 11, **dadurch gekennzeichnet, dass** der Strahlteiler (10) als entlang dieser ersten optischen Achse (12) verschiebbarer Spiegelschlitten (13) ausgebildet ist, wobei die Spiegel (11) des Strahlteilers (10) jeweils 75% des auftreffenden Lichtes um 90° in Richtung einer Probe reflektieren und 25% dieses Lichtes auf den jeweils dahinter liegenden Spiegel (11) passieren lassen.

**13.** Verfahren nach einem der Ansprüche 11 oder 12, bei dem eine Vorrichtung (1) verwendet wird, welche zudem eine weitere Lichtquelle (18) umfasst, **dadurch gekennzeichnet, dass** der Strahlteiler (10) aus der Vorrichtung (1) herausgenommen und durch ein Filterelement (19) ersetzt wird, wobei das Filterelement (19) als entlang dieser ersten optischen Achse (12) verschiebbarer Filterschlitten (20) mit einem oder mehreren Filtern (21) - welche einen Teil des Lichts der weiteren Lichtquelle (18) in Richtung der Probe passieren lassen - ausgebildet ist.

**14.** Verfahren nach Anspruch 12 oder 13, **dadurch gekennzeichnet, dass** der Spiegelschlitten (13) bzw. der Filterschlitten (20) mit einem Antrieb automatisch in die für eine bestimmte Probe richtige Position verfahren wird.

**15.** Verfahren nach einem der Ansprüche 11 bis 14, wobei eine Vorrichtung (1) verwendet wird, die zwei Lichtquellen (2) in Form von Lasern umfasst, **dadurch gekennzeichnet, dass** die beiden Laser an einen ersten Lichtleiter (25) bzw. zweiten Lichtleiter (25') gekoppelt sind und die beiden Lichtleiter (25,25') das Licht der beiden Laser an einer Anschlussstelle in eine Sammellinse (22) einspeisen, welche die beiden dadurch definierten Fokuspunkte in einem bestimmten Well einer Mikroplatte (6) positioniert.

**16.** Verfahren nach einem oder mehreren der vorhergehenden Ansprüche 11 bis 15, **dadurch gekennzeichnet, dass** es folgende Arbeitsschritte umfasst:

1) Durchführen einer Referenzmessung ohne Anwesenheit einer Probe zum Bestimmen der Gerätekonstante;
2) Ermitteln der Randbedingungen für die Angleichungsparameter ausgehend von der Referenzmessung:

a) Bestimmen des Zeitpunktes (33) an dem das Maximum (31) auftritt;
b) Bestimmen des Zeitpunktes (36), indem von dem Ende des Zeitfensters (36) eine konstantes Zeitintervall (39) subtrahiert wird;

3) Messen der Proben in den Wells einer Mikroplatte.

**17.** Verfahren nach Anspruch 16, **dadurch gekennzeichnet, dass** beim Messen der Proben in den Wells einer Mikroplatte (6) ein Anpassen der Probendaten ausgeführt wird, welches folgende Schritte umfasst:

a) bi-exponentielle Voranpassung unter Verwendung der Randbedingungen aus 2), das Ergebnis sind zwei Lebensdauern;
b1) Falls die erste Lebenszeit kurz ist und die dazugehörende erste Amplitude einen signifikanten Anteil der Gesamtamplitude darstellt, wird die Anpassung ausgehend vom Zeitpunkt (33) zuzüglich eines kurzen Zeitintervalls (38) gestartet;
b2) Falls die Bedingungen von b1) nicht erfüllt sind, wird die Anpassung ausgehend vom Zeitpunkt (33) zuzüglich eines langen Zeitintervalls gestartet;
c1) Falls die zweite Lebenszeit viel länger ist als die erste Lebenszeit, wird eine bi-exponentielle Anpassung ausgeführt, wobei die beiden Lebensdauern ermittelt werden;
c2) Falls die Bedingungen von c1) nicht erfüllt sind, wird eine monoexponentielle Anpassung ausgeführt, wobei die einzelne Lebenszeit resultiert.

**18.** Computerprogrammprodukt zur Steuerung der Vorrichtung (1) und zur automatischen Auswertung der Messdaten, **dadurch gekennzeichnet, dass** das in einem Computer aktivierte Computerprogrammprodukt einen Prozessor befähigt, mit der Vorrichtung (1) - gemäss zumindest einem der Ansprüche 1 bis 10 - zumindest ein Well einer Mikroplatte (6) anzusteuern, die Probe im Well mit Anregungslicht (4) zu aktivieren, die Lebensdauer der von der Probe ausgesendeten Fluoreszenz (8) zu messen und der Probe eine diese charakterisierende Kennzahl zuzuordnen.

**19.** Computerprogrammprodukt zur Steuerung der Vorrichtung (1) und zur automatischen Auswertung der Messdaten, **dadurch gekennzeichnet, dass** das in einem Computer aktivierte Computerprogrammprodukt einen Prozessor befähigt, mit dem Verfahren gemäss zumindest einem der Ansprüche 11 bis 17 zumindest ein Well einer Mikroplatte (6) anzusteuern, die Probe im Well mit einem Anregungslicht (4) zu aktivieren, die Lebensdauer der von der Probe ausgesendeten Fluoreszenz (8) zu messen und der Probe eine diese charakterisierende Kennzahl zuzuordnen.

Fig. 1A

Fig. 1B

Fig. 2A

Fig. 2B

Fig. 3A

Fig. 3B

Fig. 4

EP 1 387 162 A1

**Europäisches Patentamt**

## EUROPÄISCHER RECHERCHENBERICHT

Nummer der Anmeldung

EP 03 01 6383

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | DE 299 18 300 U (TECAN AUSTRIA GMBH GROEDIG) 13. Juli 2000 (2000-07-13)<br><br>* Zusammenfassung *<br>* Seite 1, Absatz 4 *<br>* Seite 3, Absatz 2 – Absatz 5 *<br>* Abbildung 1 *<br>--- | 1,2,4-6, 10-14, 18,19 | G01N21/64<br>G01N21/25<br>G02B26/02<br>G02B27/14 |
| A | GB 2 209 422 A (EMI PLC THORN) 10. Mai 1989 (1989-05-10)<br>* Abbildungen 1,2 *<br>* Zusammenfassung *<br>--- | 3,12 | |
| A | DE 199 14 279 C (JENA OPTRONIK GMBH) 7. September 2000 (2000-09-07)<br>* Spalte 3, Zeile 4 – Zeile 30 *<br>* Spalte 4, Zeile 6 – Zeile 27 *<br>--- | 1,11 | |
| A | US 5 542 012 A (FERNANDES JORGE ET AL) 30. Juli 1996 (1996-07-30)<br>* Spalte 6, Zeile 63 – Spalte 7, Zeile 23 *<br>--- | 7-9,15 | |
| D,A | US 6 187 267 B1 (EDWARDS GLENN R ET AL) 13. Februar 2001 (2001-02-13)<br>* das ganze Dokument *<br>--- | 1,11 | **RECHERCHIERTE SACHGEBIETE (Int.Cl.7)**<br><br>G01N<br>G02B |
| D,A | WO 99 23466 A (OWICKI JOHN C ;LJL BIOSYSTEMS INC (US); MODLIN DOUGLAS N (US)) 14. Mai 1999 (1999-05-14)<br>* das ganze Dokument *<br>----- | 1,11 | |

Der vorliegende Recherchenbericht wurde für alle Patentansprüche erstellt

| Recherchenort | Abschlußdatum der Recherche | Prüfer |
|---|---|---|
| DEN HAAG | 3. Oktober 2003 | Verdoodt, E |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...............................................................
& : Mitglied der gleichen Patentfamilie, übereinstimmendes Dokument

EPO FORM 1503 03.82 (P04C03)

13

**ANHANG ZUM EUROPÄISCHEN RECHERCHENBERICHT
ÜBER DIE EUROPÄISCHE PATENTANMELDUNG NR.**    EP 03 01 6383

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-10-2003

| Im Recherchenbericht angeführtes Patentdokument | | Datum der Veröffentlichung | Mitglied(er) der Patentfamilie | | Datum der Veröffentlichung |
|---|---|---|---|---|---|
| DE 29918300 | U | 13-07-2000 | AT | 3085 U1 | 27-09-1999 |
| | | | DE | 29918300 U1 | 13-07-2000 |
| GB 2209422 | A | 10-05-1989 | KEINE | | |
| DE 19914279 | C | 07-09-2000 | DE | 19914279 C1 | 07-09-2000 |
| | | | US | 6542241 B1 | 01-04-2003 |
| US 5542012 | A | 30-07-1996 | US | 5436718 A | 25-07-1995 |
| | | | US | 5946431 A | 31-08-1999 |
| | | | AT | 190397 T | 15-03-2000 |
| | | | AU | 7247694 A | 28-02-1995 |
| | | | DE | 69423358 D1 | 13-04-2000 |
| | | | DE | 69423358 T2 | 26-10-2000 |
| | | | EP | 0711407 A1 | 15-05-1996 |
| | | | FI | 960402 A | 29-01-1996 |
| | | | JP | 9500724 T | 21-01-1997 |
| | | | WO | 9504263 A1 | 09-02-1995 |
| US 6187267 | B1 | 13-02-2001 | US | 6097025 A | 01-08-2000 |
| | | | US | 6576476 B1 | 10-06-2003 |
| | | | US | 6469311 B1 | 22-10-2002 |
| | | | AU | 8485398 A | 10-02-1999 |
| | | | EP | 1012579 A2 | 28-06-2000 |
| | | | JP | 2002509235 T | 26-03-2002 |
| | | | US | 6071748 A | 06-06-2000 |
| | | | WO | 9904228 A2 | 28-01-1999 |
| | | | US | 2001021074 A1 | 13-09-2001 |
| | | | US | 6033100 A | 07-03-2000 |
| | | | US | 6025985 A | 15-02-2000 |
| | | | US | 6159425 A | 12-12-2000 |
| | | | US | 6499366 B1 | 31-12-2002 |
| | | | US | 2001007640 A1 | 12-07-2001 |
| | | | AU | 1518499 A | 24-05-1999 |
| | | | EP | 1032813 A2 | 06-09-2000 |
| | | | JP | 2003521670 T | 15-07-2003 |
| | | | WO | 9923466 A2 | 14-05-1999 |
| | | | AU | 2344899 A | 09-08-1999 |
| | | | WO | 9937203 A2 | 29-07-1999 |
| | | | AU | 2775899 A | 06-09-1999 |
| | | | EP | 1060384 A1 | 20-12-2000 |
| | | | US | 2002056803 A1 | 16-05-2002 |
| | | | WO | 9942817 A1 | 26-08-1999 |
| | | | US | 6326605 B1 | 04-12-2001 |
| | | | AU | 3649199 A | 08-11-1999 |
| | | | EP | 1071942 A1 | 31-01-2001 |

EPO FORM P0461

Für nähere Einzelheiten zu diesem Anhang : siehe Amtsblatt des Europäischen Patentamts, Nr.12/82

**EP 1 387 162 A1**

## ANHANG ZUM EUROPÄISCHEN RECHERCHENBERICHT
## ÜBER DIE EUROPÄISCHE PATENTANMELDUNG NR.  EP 03 01 6383

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-10-2003

| Im Recherchenbericht angeführtes Patentdokument | Datum der Veröffentlichung | Mitglied(er) der Patentfamilie | Datum der Veröffentlichung |
|---|---|---|---|
| US 6187267 B1 | | WO 9954711 A1 | 28-10-1999 |
| | | US 6258326 B1 | 10-07-2001 |
| | | US 6488892 B1 | 03-12-2002 |
| | | AU 5223899 A | 21-02-2000 |
| | | WO 0006991 A2 | 10-02-2000 |
| | | US 2001007496 A1 | 12-07-2001 |
| | | US 2001006417 A1 | 05-07-2001 |
| | | AU 5667599 A | 21-02-2000 |
| | | US 2002158212 A1 | 31-10-2002 |
| | | WO 0006990 A2 | 10-02-2000 |
| | | US 2001003044 A1 | 07-06-2001 |
| | | AU 5667499 A | 21-02-2000 |
| | | WO 0006989 A2 | 10-02-2000 |
| | | US 2001016330 A1 | 23-08-2001 |
| WO 9923466 A | 14-05-1999 | US 6071748 A | 06-06-2000 |
| | | US 6258326 B1 | 10-07-2001 |
| | | US 6097025 A | 01-08-2000 |
| | | AU 1518499 A | 24-05-1999 |
| | | EP 1012579 A2 | 28-06-2000 |
| | | EP 1032813 A2 | 06-09-2000 |
| | | JP 2002509235 T | 26-03-2002 |
| | | JP 2003521670 T | 15-07-2003 |
| | | WO 9904228 A2 | 28-01-1999 |
| | | WO 9923466 A2 | 14-05-1999 |
| | | US 2001021074 A1 | 13-09-2001 |
| | | US 6033100 A | 07-03-2000 |
| | | US 6025985 A | 15-02-2000 |
| | | US 6159425 A | 12-12-2000 |
| | | US 6499366 B1 | 31-12-2002 |
| | | US 6187267 B1 | 13-02-2001 |
| | | US 6469311 B1 | 22-10-2002 |
| | | US 2001007640 A1 | 12-07-2001 |
| | | AU 2344899 A | 09-08-1999 |
| | | AU 8485398 A | 10-02-1999 |
| | | WO 9937203 A2 | 29-07-1999 |
| | | AU 2775899 A | 06-09-1999 |
| | | EP 1060384 A1 | 20-12-2000 |
| | | US 2002056803 A1 | 16-05-2002 |
| | | WO 9942817 A1 | 26-08-1999 |
| | | US 6326605 B1 | 04-12-2001 |
| | | AU 3649199 A | 08-11-1999 |
| | | EP 1071942 A1 | 31-01-2001 |
| | | US 2002158212 A1 | 31-10-2002 |
| | | WO 9954711 A1 | 28-10-1999 |
| | | US 6488892 B1 | 03-12-2002 |

Für nähere Einzelheiten zu diesem Anhang : siehe Amtsblatt des Europäischen Patentamts, Nr.12/82

15

**ANHANG ZUM EUROPÄISCHEN RECHERCHENBERICHT**
**ÜBER DIE EUROPÄISCHE PATENTANMELDUNG NR.**                 EP 03 01 6383

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-10-2003

| Im Recherchenbericht angeführtes Patentdokument | Datum der Veröffentlichung | Mitglied(er) der Patentfamilie | Datum der Veröffentlichung |
|---|---|---|---|
| WO 9923466 A | | US 6297018 B1 | 02-10-2001 |
| | | AU 5223899 A | 21-02-2000 |
| | | WO 0006991 A2 | 10-02-2000 |
| | | US 2001007496 A1 | 12-07-2001 |
| | | US 2001006417 A1 | 05-07-2001 |
| | | AU 5667599 A | 21-02-2000 |
| | | WO 0006990 A2 | 10-02-2000 |
| | | US 2001003044 A1 | 07-06-2001 |
| | | AU 4999099 A | 07-02-2000 |
| | | WO 0004364 A2 | 27-01-2000 |
| | | AU 1219800 A | 08-05-2000 |
| | | WO 0023785 A2 | 27-04-2000 |
| | | US 2001018194 A1 | 30-08-2001 |

EPO FORM P0461

Für nähere Einzelheiten zu diesem Anhang : siehe Amtsblatt des Europäischen Patentamts, Nr.12/82